# EUROPEAN PATENT APPLICATION

(11) **EP 4 349 480 A1**
(43) Date of publication of application: **10.04.2024**
(21) Application number: 22811387.4
(22) Date of filing: 26.05.2022
(51) Int. Cl.: B01J 23/755, B01J 25/02, B01J 35/04, B01J 37/02, B01J 37/12, C25B 11/053, C25B 11/061, C25B 11/077, C25B 11/091

(54) **CATALYST, METHOD FOR PRODUCING CATALYST, AND INTERMEDIATE PRODUCT**

(30) Priority: 26.05.2021 JP 2021088162
(71) Applicant: Tokyo Institute of Technology, Tokyo 152-8550 (JP)
(72) Inventor: YAMAGUCHI, Takeo, Tokyo 152-8550 (JP); NARAYANARU, Sreekanth, Tokyo 152-8550 (JP); G.M. Anilkumar, Tokyo 152-8550 (JP); TAMAKI, Takanori, Tokyo 152-8550 (JP)
(74) Representative: Novagraaf Technologies
(86) International application number: PCT/JP2022/021635
(87) International publication number: WO 2022/250119

(57) **Abstract**

A catalyst having both durability and high activity, a method for manufacturing the catalyst, and an intermediate product suitable for manufacturing the catalyst are provided. A catalyst includes a nickel substrate (31), a nickel oxide layer (32) containing NiOOH, and a layer (33) containing NiFe.

## Description

### Technical Field

The present disclosure relates to a catalyst, a method for manufacturing the catalyst, and an intermediate product.

### Background Art

Technologies for storing and transporting renewable energy are attracting attention. For example, the use of renewable energy to decompose water to manufacture hydrogen and oxygen, and the storage and transportation of such hydrogen are being investigated. One method for decomposing water is solid alkaline water electrolysis using anion exchange membranes, which can support output fluctuations, and materials other than noble metals, such as stainless steel, can be used for bipolar plates. Thus, solid alkaline water electrolysis using anion exchange membranes are expected to achieve both high performance and low cost, and therefore this technology is being recognized as a next-generation technology and is gaining attention.

In related art, noble metals such as platinum have been used as catalysts for solid alkaline water electrolysis. On the other hand, catalysts that do not use a noble metal are being sought to reduce cost, and catalysts using nickel have been investigated as an example (e.g., Patent Literature 1 and 2).

### Citation List

### Patent Literature

Patent Literature 1: Japanese Unexamined Patent Application Publication No. 2019-34256
Patent Literature 2: Japanese Unexamined Patent Application Publication No. 2020-179327

### Summary of Invention

### Technical Problem

Catalysts using nickel are sought as they have high activity and excellent durability in alkaline environments.

The present disclosure has been made to solve the above problem, and an object thereof is to provide a catalyst having both durability and high activity, a method for manufacturing the catalyst, and an intermediate product suitable for manufacturing the catalyst.

### Solution to Problem

A catalyst according to the present disclosure includes: a nickel substrate; a nickel oxide layer containing NiOOH; and a layer containing NiFe.

In one aspect of the above catalyst, the nickel oxide layer has a thickness of 50 to 500 nm.

In one aspect of the above catalyst, a proportion of Fe is 4 to 20 mass% of a total amount of the catalyst.

In one aspect of the above catalyst, the catalyst is an electrode material for oxygen generation.

A method for manufacturing the catalyst according to the present disclosure includes a step (I) of forming a nickel oxide layer containing NiOOH on a nickel substrate.

In one aspect of the above method of manufacturing the catalyst, the step (I) includes electrochemical oxidation of a nickel substrate.

One aspect of the above method of manufacturing the catalyst further includes a step (II) of forming a layer containing NiFe on the nickel oxide layer after the step (I).

In one aspect of the above method of manufacturing the catalyst, the step (II) includes electrodeposition of Fe.

An intermediate product of the catalyst according to the present disclosure includes: a nickel substrate; and a nickel oxide layer containing NiOOH formed on the nickel substrate.

### Advantageous Effects of Invention

According to the present disclosure, the present disclosure solves the above problem, and provides a catalyst having both durability and high activity, a method for manufacturing the catalyst, and an intermediate product suitable for manufacturing the catalyst.

### Brief Description of Drawings

Fig. 1 is a schematic cross-sectional view showing an example of the present catalyst;
Fig. 2 is a schematic cross-sectional view showing another example of the present catalyst;
Fig. 3 is a schematic cross-sectional view showing an example of a water electrolysis apparatus;
Fig. 4 is a Raman spectra of an intermediate product obtained in Example 1;
Fig. 5 is a cross-sectional SEM image and an EDX image of a catalyst obtained in Example 1;
Fig. 6 is a cross-sectional SEM image and an EDX image of a catalyst obtained in Comparative Example 1;
Fig. 7 is a graph showing a measurement result of current density;
Fig. 8 is a graph showing a measurement result of current density after 12 hours; and
Fig. 9 is a graph showing a durability evaluation result of the catalyst obtained in Example 1.

### Description of Embodiments

A catalyst according to the present disclosure (hereinafter may be simply referred to as the present catalyst), a method for manufacturing the catalyst, and an intermediate product will be described in detail below. In the present disclosure, "to" indicating a numerical range means that the numerical values stated before and after "to" are included as the lower and upper limits. In order to clarify the explanation, the following descriptions and drawings are simplified as appropriate. In addition, matters necessary for the implementation of the present disclosure not specifically referred to herein may be understood as design matters by a person skilled in the art based on related art in the field.

### 1. Catalyst

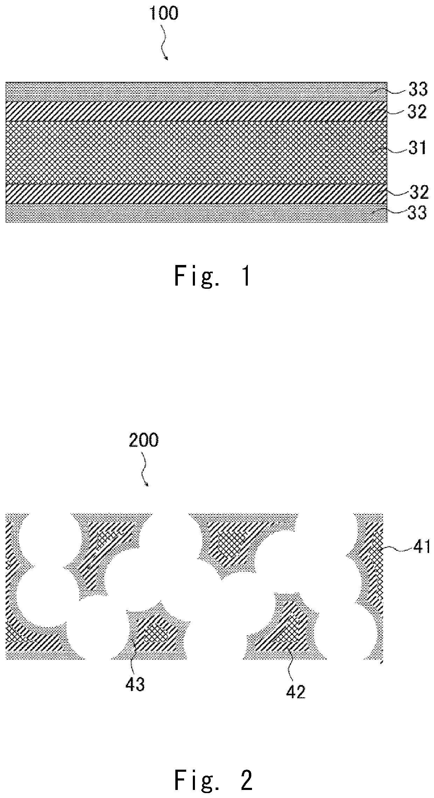

The present catalyst will be described with reference to Figs. 1 and 2. Figs. 1 and 2 are schematic cross-sectional views of the catalyst. In a catalyst 100 shown in the example of Fig. 1, a nickel substrate 31 is a plate-like substrate, and has a nickel oxide layer 32 containing NiOOH and a layer 33 containing NiFe formed on the nickel substrate 31 in this order.

In a catalyst 200 shown in the example of Fig. 2, a nickel substrate 41 is a porous substrate, and a nickel oxide layer 42 containing NiOOH and a layer 43 containing NiFe are formed on the nickel substrate 41 in this order. In the example of Fig. 2, a porous inner surface also has the above layer configuration.

By having the above layer configuration, the present catalyst can have both durability and high activity in alkaline environments while using a nickel substrate.

The shapes of the nickel substrates 31 and 41 can be appropriately selected according to the application of the present catalyst. The shapes of the substrates include, for example, plate shape, film shape, wire shape, fiber shape, porous shape, foam shape, felt (non-woven fabric) shape, mesh shape, and the like.

The nickel substrate may contain other elements to the extent that the effect of the present invention is achieved.

A nickel foam is preferred as the nickel substrate. The thickness of the nickel substrate is preferably 100 to 2000 µm and more preferably 200 to 1600 µm. If the thickness is 100 µm or more, the catalyst will have excellent durability and activity.

The nickel oxide layers 32 and 42 are characterized by containing NiOOH. The present catalyst, by having these nickel oxide layers, exhibits superior durability and activity compared to catalysts with a layer containing NiFe directly on the nickel substrate.

The nickel oxide layer should contain at least NiOOH and may further contain other nickel oxides within the scope of the present invention's effects. Examples of other nickel oxides include NiO and Ni₂O₃.

The proportion of NiOOH in the nickel oxide layer is preferably 50 mass% or more, more preferably 80 mass% or more, and even more preferably 90 mass% or more, with respect to 100 mass% of the nickel oxide layer.

In the present catalyst, the thickness of the nickel oxide layer is preferably 50 to 500 nm, more preferably 100 to 400 nm. If the nickel oxide layer is 50 nm or more, it is possible to obtain a catalyst with excellent durability and activity. In addition, a sufficient effect can be obtained if the thickness of the nickel oxide layer is 500 nm or less.

The present catalyst has a layer containing NiFe on the nickel oxide layer. By forming an NiFe layer on the nickel oxide layer, the leaching of Fe is suppressed, and thus the catalyst has excellent durability.

The proportion of Fe in the present catalyst is preferably 4 to 20 mass% with respect to the total amount of the catalyst containing the nickel substrate. With the proportion of Fe of 4 mass% or more, it is possible to obtain a catalyst with excellent durability and activity. Additionally, Fe content of 20% or less is sufficient to achieve the desired effect.

The thickness of each layer can be measured by scanning electron microscopy (SEM) and mapping with an energy dispersive X-ray analyzer (EDX). The composition of each layer can be measured by X-ray photoelectron spectroscopy (XPS).

### 2. Method for manufacturing catalyst

Next, a method for manufacturing the above catalyst (hereinafter also referred to as the present manufacturing method) will be described.

The present manufacturing method is characterized by including a step (I) of forming a nickel oxide layer containing NiOOH on a nickel substrate. According to the present manufacturing method, by forming the nickel oxide layer containing NiOOH on the nickel substrate, the formation of the layer containing NiFe is facilitated, and thus the leaching of the layer containing NiFe is suppressed.

As a method for forming the nickel oxide layer on the nickel substrate, examples include methods where particles of NiOOH are sprayed using techniques like aerosol deposition and methods involving the oxidation of the nickel substrate surface. When the nickel substrate is a porous substrate such as a foam, a method for oxidizing the surface of the substrate is preferable, because the nickel oxide layer is easily formed on the internal surface. Electrochemical oxidation is preferable as a method for oxidizing the surface of the substrate.

The electrochemical oxidation involves, for example, preparing a nickel substrate having a desired shape, immersing the nickel substrate in an alkaline electrolyte or the like, and applying a voltage to oxidize it. The nickel substrate may be manufactured using a known method or a commercially available product may be used. If the nickel substrate has an oxide layer, the nickel substrate may be subjected to an acid treatment as necessary. The thickness of the nickel oxide layer can be adjusted by adjusting the duration of voltage application.

The formation of the nickel oxide layer can be confirmed by techniques such as Raman spectra.

The intermediate product obtained through the step (I) is a new intermediate product having a nickel substrate and a nickel oxide layer containing NiOOH formed on the nickel substrate, and is suitable for manufacturing the present catalyst. Since each structure of the intermediate product is the same as that of the present catalyst except for the layer containing NiFe, description thereof is omitted.

Next, after the step (I), there is a step (II) of forming a layer containing NiFe on the nickel oxide layer.

As a method for forming a layer containing NiFe on the nickel oxide layer, examples include techniques such as spraying particles of NiFe using an aerosol deposition method and electrodeposition of Fe. In the case where the nickel substrate is a porous substrate such as a foam, electrodeposition of Fe is preferable as it facilitates the formation of a layer containing NiFe on the internal surface.

Electrodeposition of Fe includes, for example, a method for immersing the intermediate product in an electrolyte containing Fe²⁺ and applying a voltage to achieve electrodeposition. By adjusting the duration of voltage application, the thickness of the layer containing NiFe and the proportion of Fe in the present catalyst can be adjusted.

By using the above method, it is possible to manufacture the present catalyst. The present catalyst can be suitably used as an electrode material for oxygen generation. An example of a water electrolysis apparatus using the present catalyst will be provided for explanation.

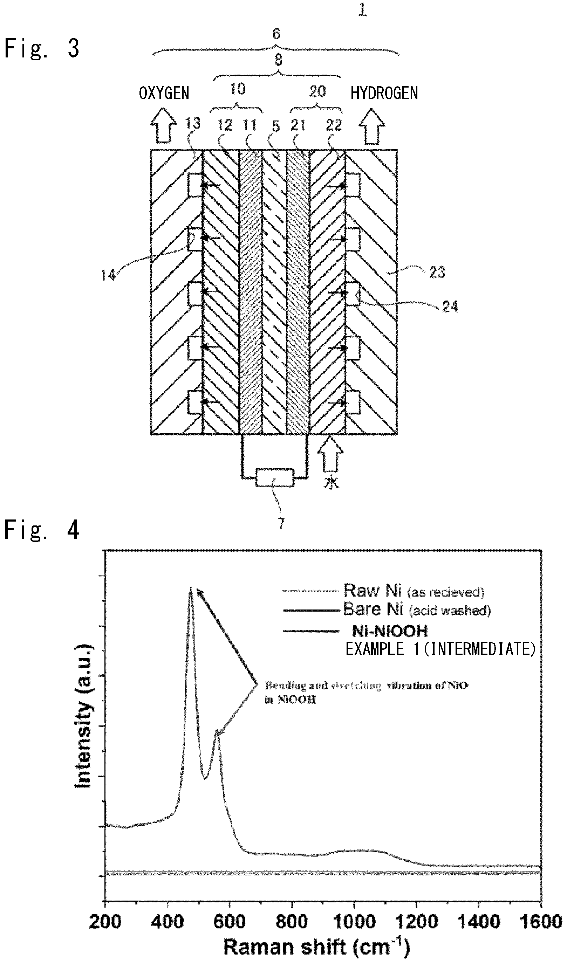

Fig. 3 is a schematic cross-sectional view showing an example of the water electrolysis apparatus. The water electrolysis apparatus shown in the example of Fig. 3 includes an anode 10, a cathode 20, an electrolyte membrane 5 disposed between the anode 10 and the cathode 20, a power source 7 connected to the anode 10 and the cathode 20, and a water supply unit for supplying water or an alkaline aqueous solution to the cathode 20. In the anode 10, an anode catalyst 11 and a first diffusion layer 12 are disposed in this order from the side of the electrolyte membrane 5, and in the cathode 20, a cathode catalyst 21 and a second diffusion layer 22 are disposed in this order from the side of the electrolyte membrane 5. In the example of Fig. 3, there are also separators 13 and 23 provided on the outside of the anode 10 and the cathode 20, respectively, constituting the cell 6. The water electrolysis apparatus 1 may be a single cell 6 or a stack of cells 6. The water supply unit may supply water to at least one of the cathode or anode.

By using the present catalyst as the anode catalyst 11, durability as a water electrolysis apparatus is improved.

If the water electrolysis apparatus is a solid alkaline water electrolysis system, an anion conductive membrane is used as the electrolyte membrane 5. When a voltage is applied to both electrodes while supplying water or an alkaline aqueous solution to the cathode 20 side, the following reaction occurs on the cathode 20 side, resulting in the generation of hydrogen.

2H₂O+2e⁻→2OH⁻+H₂

Hydroxide ions (OH⁻) pass through the anion conductive membrane and move to the anode 10. At the anode 10, the following reaction occurs, resulting in the generation of oxygen gas.

2OH⁻→H₂O+1/2O₂+2e⁻

The generated hydrogen and oxygen are discharged from the cell 6 through the gas flow paths 14 and 24 provided in the separators 13 and 23, respectively. The gas flow paths are connected, for example, to a storage tank with gas-liquid separators (not shown) interposed therebetween, and the hydrogen and oxygen are stored in the storage tank or the like after water is separated by the gas-liquid separators.

Except for the anode catalyst 11 in the above water electrolysis apparatus, each component can be selected as appropriate from all the known options. The power source 7 can be appropriately selected from the known DC power sources, and it can be effectively used for renewable energy sources such as solar power generation and wind power generation with large fluctuations, even though with significant fluctuations.

### Example

Hereinafter, the present disclosure will be described in detail with reference to examples. The present disclosure is not limited by these descriptions, and the present disclosure may be modified as needed within the scope that does not deviate from the scope thereof.

### [Example 1: Production of the present catalyst]

A commercially available Ni foam was uniformly pressed to a thickness of 200 µm. The Ni foam was then cut into 1 cm² pieces, acid-treated with HCl, and washed with ethanol and water. The Ni foam was then immersed in 1M KOH, and 2.5 V vs RHE was applied for 1 min using a 10cm² Ni foam counter electrode and a Hg/HgO reference electrode to oxidize a surface of the Ni foam to form a nickel oxide layer containing NiOOH, resulting in an intermediate product. The nickel oxide layer containing NiOOH was confirmed by Raman spectra (see Fig. 4).

The above intermediate product was immersed in an electrolyte containing 25mM Fe²⁺, (NH₄)₂SO₄, H₂SO₄, and water, the pH of which was adjusted to 3 or lower, and degassed with N₂. Electrodeposition of Fe was carried out using a Pt counter electrode and an Ag/AgCl reference electrode through chronoamperometry. This process resulted in the catalyst of Example 1.

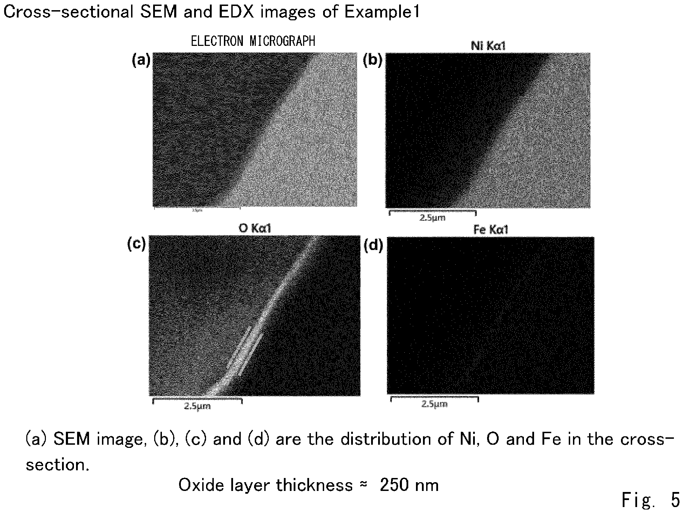

The obtained catalyst was observed by SEM and EDX, and it was confirmed that the thickness of the nickel oxide layer was about 250 nm (see Fig. 5).

### [Comparative Example 1: Catalyst manufacture]

A commercially available Ni foam was uniformly pressed to a thickness of 200 µm. The Ni foam was then cut into 1 cm² pieces, acid-treated with HCl, and washed with ethanol and water. The Ni foam was then immersed in an electrolyte containing 25mM Fe²⁺, (NH₄)₂SO₄, H₂SO₄, and water, pH adjusted to 3 or lower, and degassed with N₂. Electrodeposition of Fe was carried out using a Pt counter electrode and an Ag/AgCl reference electrode through chronoamperometry, resulting in the catalyst of Comparative Example 1.

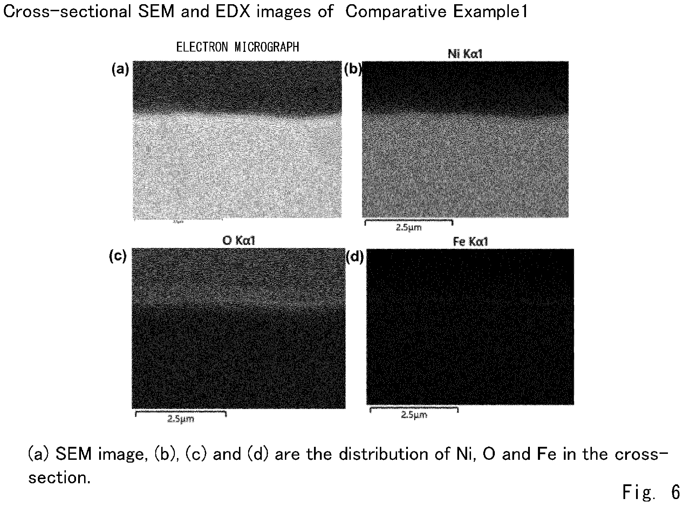

The obtained catalyst was observed by SEM and EDX (see Fig. 6).

### [Comparative Example 2]

As a catalyst of Comparative Example 2, the intermediate product obtained in Example 1 was used.

### [Comparative Example 3]

As a catalyst of Comparative Example 3, a Ni foam pressed so as to have a thickness of 200 µm was cut into 1cm² pieces, acid-treated with HCl, and washed with ethanol and water.

### [Measurement of current density]

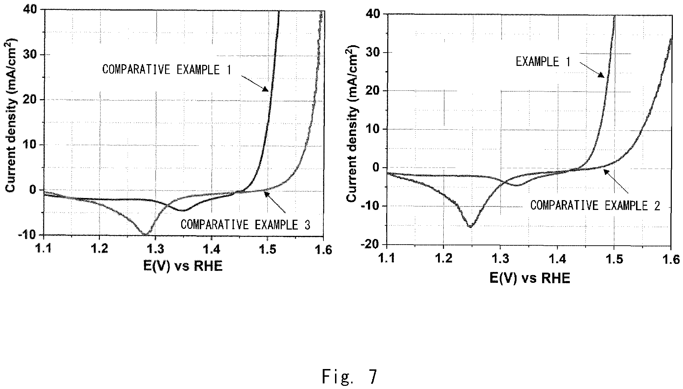

A voltage was applied to the catalysts of Example 1 and Comparative Examples 1 to 3, and the current density was measured. The results are shown in Fig. 7.

As shown in Fig. 7, the catalyst of Example 1 achieved a current density of 10 mA/cm² at a voltage of 1.47 V, while the catalyst of Comparative Example 1 achieved the same at a voltage of 1.49 V, Comparative Example 2 achieved the same at a voltage of 1.49 V, and Comparative Example 3 achieved the same at a voltage of 1.56 V.

### [Electrochemical analysis]

The following electrochemical reactions were carried out in a three-electrode electrochemical cell. A 1 cm² catalyst manufactured in each of the above examples and comparative examples was used as the working electrode, a Pt foil of 18 cm² was used as a counter electrode, and a Hg/HgO reference electrode was used as a reference electrode. The measured potential values were converted to a reversible hydrogen electrode (RHE). 1M KOH was used as the electrolyte. Voltammetric analysis was conducted at a scan rate of 10 mV/s to measure the oxygen evolution reaction (OER) activity of the catalyst. After the initial OER activity analysis, the OER stability of the catalyst was evaluated by conducting galvanostatic electrolysis at 10 mA/cm² for 24 hours. The OER activity of the catalyst was checked after the first 12 hours and at the end of electrolysis using a voltammetric response.

The stability of the catalyst in Example 1, which showed stable OER activity after 24 hours of electrolysis at 10 mA/cm², was further evaluated by conducting electrolysis at 50 mA/cm² for 20 hours. After electrolysis, a voltammetric response was used to check the OER activity of the catalyst.

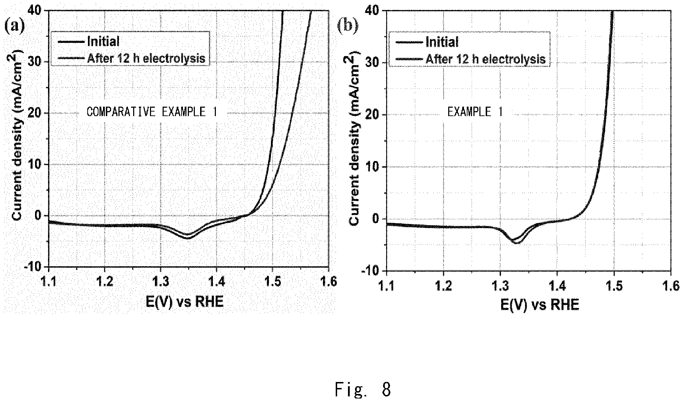

Fig. 8 shows the results of measuring the current density of the catalysts of Example 1 and Comparative Example 1 after applying a constant current of 10 mA/cm² for 12 hours. Table 1 shows the results of measuring the concentrations of iron and nickel before and after applying a constant current for 12 hours using EDX.

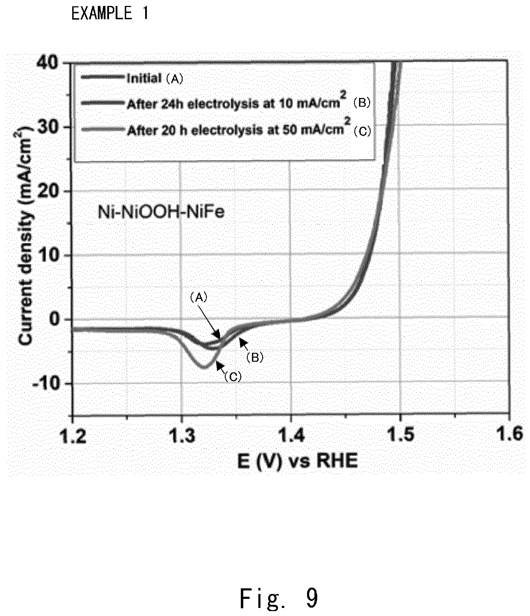

In addition, Fig. 9 shows the results of measuring the current density of the catalyst of Fig. 1 at the beginning of electrolysis, after 24 hours of electrolysis at 10 mA/cm², and after 20 hours of electrolysis at 50 mA/cm².

### [Table 1]

**Table 1**

| | | Mass Concentration [%] | |
|---|---|---|---|
| | | Before Electrolysis | After Electrolysis |
| Example 1 | Iron | 8 | 12 |
| | Nickel | 92 | 88 |
| Comparative Example 1 | Iron | 17 | 9.8 |
| | Nickel | 83 | 90.2 |

As shown in Figs. 8 and 9, it can be seen that the catalyst in Comparative Example 1 exhibits a higher voltage required to achieve a current density of 10 mA/cm² after 12 hours. In contrast, the catalyst in Example 1 shows that the voltage required to achieve a current density of 10 mA/cm² remains substantially unchanged, indicating high durability.

In addition, as shown in Table 1, the catalyst in Comparative Example 1 exhibited a significant decrease in the mass concentration of iron after 12 hours, confirming the leaching of iron.

From the above, it was shown that the present catalyst having a nickel oxide layer containing NiOOH and a layer containing NiFe in this order on a nickel substrate has high activity and excellent durability.

This application claims priority on the basis of Japanese Patent Application No. 2021-088162, filed May 26, 2021, the entire disclosure of which is incorporated herein by reference.

### Reference Signs List

- 1:: WATER ELECTROLYSIS APPARATUS
- 5:: ELECTROLYTE MEMBRANE
- 6:: CELL
- 7:: POWER SOURCE
- 8:: MEMBRANE ELECTRODE ASSEMBLY
- 10:: ANODE (ANODE ELECTRODE)
- 11:: ANODE CATALYST
- 12:: FIRST DIFFUSION LAYER
- 13:: SEPARATOR
- 14:: GAS FLOW PATH
- 20:: CATHODE (CATHODE ELECTRODE)
- 21:: CATHODE CATALYST
- 22:: SECOND DIFFUSION LAYER
- 23:: SEPARATOR
- 24:: GAS FLOW PATH
- 31,: 4UNICKEL SUBSTRATE
- 32, 42:: NICKEL OXIDE LAYER
- 33, 43:: LAYER CONTAINING NiFE
- 100, 200:: CATALYST

## Claims

1. A catalyst comprising:
a nickel substrate;
a nickel oxide layer containing NiOOH; and
a layer containing NiFe.

2. The catalyst according to claim 1, wherein the nickel oxide layer has a thickness of 50 to 500 nm.

3. The catalyst according to claim 1 or 2, wherein a proportion of Fe is 4 to 20 mass% of a total amount of the catalyst.

4. The catalyst according to any one of claims 1 to 3, wherein the catalyst is an electrode material for oxygen generation.

5. A method for manufacturing the catalyst according to any one of claims 1 to 4, the method comprising a step (I) of forming a nickel oxide layer containing NiOOH on a nickel substrate.

6. The method according to claim 5, wherein the step (I) comprises electrochemical oxidation of a nickel substrate.

7. The method according to claim 5 or 6, further comprising a step (II) of forming a layer containing NiFe on the nickel oxide layer after the step (I).

8. The method according to claim 7, wherein the step (II) includes electrodeposition of Fe.

9. An intermediate product of the catalyst according to any one of claims 1 to 4, comprising:
a nickel substrate; and
a nickel oxide layer containing NiOOH formed on the nickel substrate.
